# EUROPEAN PATENT APPLICATION

(11) **EP 4 269 906 A1**
(43) Date of publication of application: **01.11.2023**
(21) Application number: 21910170.6
(22) Date of filing: 30.11.2021
(51) Int. Cl.: F25B 15/00, F28F 25/04, F25B 37/00

(54) **ABSORBER FOR ABSORPTION CHILLER, HEAT EXCHANGE UNIT FOR ABSORPTION CHILLER, AND ABSORPTION CHILLER**

(30) Priority: 22.12.2020 JP 2020212159
(71) Applicant: Panasonic Intellectual Property Management Co., Ltd., Kadoma-shi, Osaka 571-0057 (JP)
(72) Inventor: KAWANO, Bunki, Kadoma-shi, Osaka 571-0057 (JP); SUN, Hongzhi, Kadoma-shi, Osaka 571-0057 (JP); SHIMODAHIRA, Nobukazu, Kadoma-shi, Osaka 571-0057 (JP); MATSUI, Masaru, Kadoma-shi, Osaka 571-0057 (JP)
(74) Representative: Eisenführ Speiser
(86) International application number: PCT/JP2021/043951
(87) International publication number: WO 2022/138018

(57) **Abstract**

An absorber 3 for an absorption refrigerator includes a first container 31a, a first heat transfer tube group 32a, a first drip feed 5a, a second container 31b, a second heat transfer tube group 32b, and a second drip feed 5b. The first drip feed 5a drips, toward the first heat transfer tube group 32a, a first absorbent liquid 30a that has passed through each of a plurality of first openings 56a. The second drip feed 5b includes a plurality of second openings 56b. The second openings 56b are arranged along a longitudinal direction of second heat transfer tubes 32q. The second drip feed 5b drips, toward the second heat transfer tube group 32b, a second absorbent liquid 30b that includes at least a part or all of the first absorbent liquid 30a dripped by the first drip feed 5a and that has passed through each of the second openings 56b. The absorber 3 satisfies a relationship ofA2/L2<A1/L1.

## Description

### TECHNICAL FIELD

The present disclosure relates to an absorber for an absorption refrigerator, a heat exchange unit for an absorption refrigerator, and an absorption refrigerator.

### BACKGROUND ART

Liquid sprinkling devices having the liquid dripping configuration for absorption refrigerators are conventionally known.

For example, the liquid sprinkling device described in Patent Literature 1 includes a tray and a guide body. The tray is long for receiving the liquid to be sprinkled. The guide body has a large number of ports for dripping provided in the longitudinal direction, and the liquid is dripped through the ports. The guide body is provided with a damming wall, and the damming wall has a long-side dam portion and a short-side dam portion. The long-side dam portion dams a long-side open end of a liquid receiving portion of the guide body. The short-side dam portion dams a short-side open end of the liquid receiving portion.

### CITATION LIST

### Patent Literature

Patent Literature 1: JP H7-4782 A

### SUMMARY OF INVENTION

### Technical Problem

The present disclosure provides an absorber for an absorption refrigerator that is advantageous in increasing the wettability of heat transfer tubes relative to an absorbent liquid while dripping the absorbent liquid over a plurality of stages.

### Solution to Problem

An absorber for an absorption refrigerator of the present disclosure includes:
a first container;
a first heat transfer tube group including a plurality of first heat transfer tubes arranged in rows and columns inside the first container;
a first drip feed having a plurality of first openings arranged along a longitudinal direction of the first heat transfer tubes, the first drip feed being configured to drip, toward the first heat transfer tube group, a first absorbent liquid that has passed through each of the first openings;
a second container;
a second heat transfer tube group including a plurality of second heat transfer tubes arranged in rows and columns inside the second container; and
a second drip feed having a plurality of second openings arranged along a longitudinal direction of the second heat transfer tubes, the second drip feed being configured to drip, toward the second heat transfer tube group, a second absorbent liquid that includes at least a part or all of the first absorbent liquid dripped by the first drip feed and that has passed through each of the second openings, wherein
the first absorbent liquid and the second absorbent liquid are allowed to absorb a vapor-phase refrigerant generated by an evaporator, and
an opening area A1 of each first opening, a peripheral length L1 of each first opening, an opening area A2 of each second opening, and a peripheral length L2 of each second opening satisfy a relationship of A2/L2<A1/L1.

### Advantageous Effects of Invention

The absorber for an absorption refrigerator of the present disclosure satisfies the relationship of A2/L2<A1/L1, whereby passing of the absorbent liquid through the plurality of second openings of the second drip feed is unlikely to vary. Therefore, the absorber for an absorption refrigerator easily increases the wettability of the heat transfer tubes relative to the absorbent liquid while dripping the absorbent liquid over a plurality of stages.

### BRIEF DESCRIPTION OF THE DRAWINGS

FIG. 1 shows a heat exchange unit according to Embodiment 1.
FIG. 2A is a cross-sectional view showing a first drip feed and first heat transfer tubes in FIG. 1.
FIG. 2B shows the first drip feed and the first heat transfer tubes in FIG. 1.
FIG. 3A is a cross-sectional view showing a second drip feed and second heat transfer tubes in FIG. 1.
FIG. 3B shows the second drip feed and the second heat transfer tubes in FIG. 1.
FIG. 4 shows a drip feed and heat transfer tubes of an absorber according to a reference example.
FIG. 5 shows a second drip feed and second heat transfer tubes of a heat exchange unit of Embodiment 2.
FIG. 6 shows the second drip feed and the second heat transfer tubes of the heat exchange unit of Embodiment 1.
FIG. 7 shows an absorption refrigerator of Embodiment 3.

### DESCRIPTION OF EMBODIMENTS

### (Findings on which the present disclosure is based)

At the time when the present inventors conceived of the present disclosure, devices such as sprinkling devices and spraying devices have been devised as a technique of enhancing the wettability of heat transfer tubes relative to an absorbent liquid in absorbers of absorption refrigerators. It is difficult to adapt spraying devices to absorbers of absorption refrigerators, and sprinkling devices have been generally used in such absorbers. Under such a situation, the present inventors have come up with an idea of dripping an absorbent liquid over a plurality of stages in an absorber, while taking, as a hint, the fact that if absorption of a vapor-phase refrigerant generated in an evaporator is performed over a plurality of stages, more vapor-phase refrigerant can be absorbed. Then, the present inventors have found that, in achieving this idea, there is a problem that the concentration and viscosity of the absorbent liquid are reduced, dripping of the absorbent liquid varies, and the wettability of the heat transfer tubes relative to the absorbent liquid is likely to be reduced. To solve the problem, the present inventors arrived at configuring the means of the present disclosure.

Thus, the present disclosure provides an absorber for an absorption refrigerator that is advantageous in increasing the wettability of heat transfer tubes relative to an absorbent liquid while dripping the absorbent liquid over a plurality of stages.

Embodiments will be described in detail below with reference to the drawings. However, an unnecessarily detailed description may be omitted. For example, a detailed description of the matters already well known and a repeated description of substantially the same configuration may be omitted. Note that the accompanying drawings and the following description are provided for those skilled in the art to fully understand the present disclosure, and thus are not intended to limit the subject matters recited in the claims to these.

### (Embodiment 1)

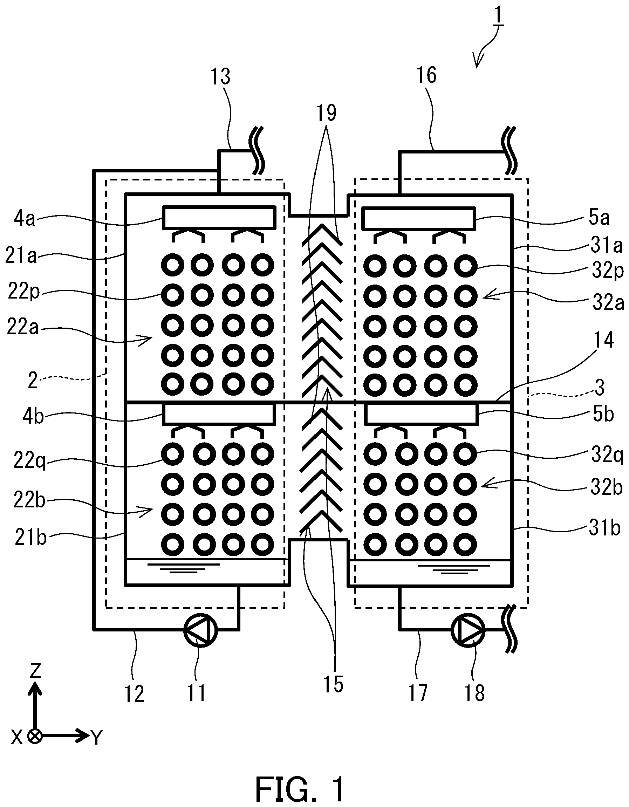

Embodiment 1 will be described with reference to FIG. 1, FIG. 2A, FIG. 2B, FIG. 3A, and FIG. 3B. In the accompanying drawings, the Z-axis negative direction represents the gravity direction. The X-axis, the Y-axis, and the Z-axis are orthogonal to each other.

### [1-1. Configuration]

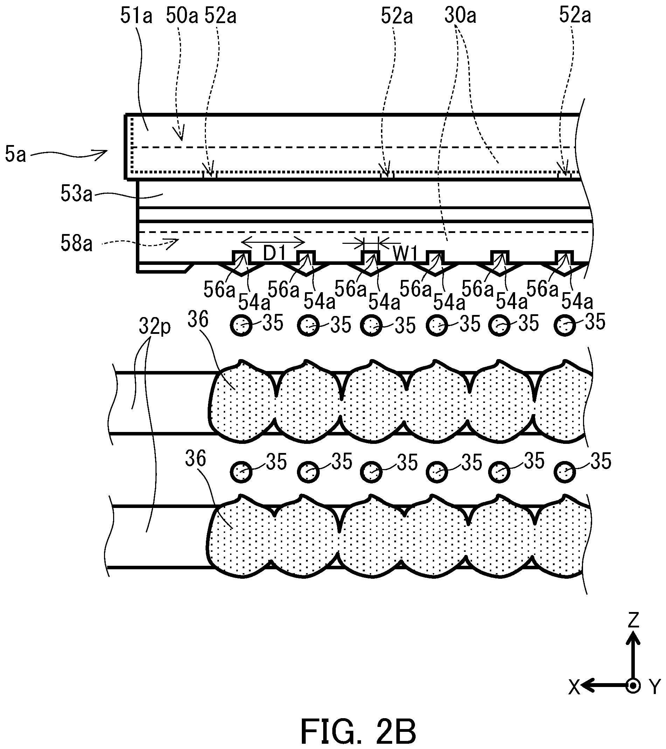

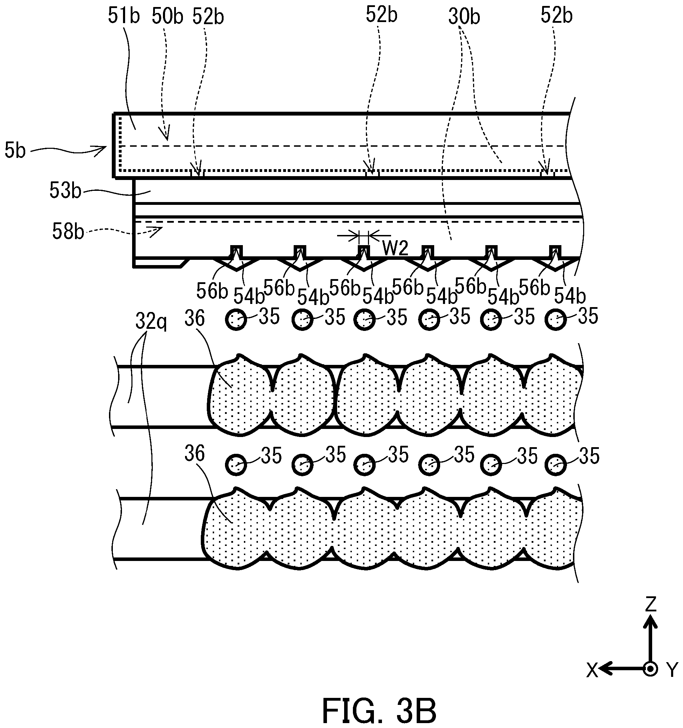

As shown in FIG. 1, an absorber 3 includes a first container 31a, a first heat transfer tube group 32a, a first drip feed 5a, a second container 31b, a second heat transfer tube group 32b, and a second drip feed 5b. The absorber 3 allows an absorbent liquid to absorb a vapor-phase refrigerant generated by an evaporator 2. The first heat transfer tube group 32a includes a plurality of first heat transfer tubes 32p. The first heat transfer tubes 32p are arranged in rows and columns inside the first container 31a. As shown in FIG. 2B, the first drip feed 5a has a plurality of first openings 56a. The first openings 56a are arranged along the longitudinal direction of the first heat transfer tubes 32p (X-axis direction). The first openings 56a are arranged, for example, at equal intervals in a direction parallel to the longitudinal direction of the first heat transfer tubes 32p. The first drip feed 5a drips a first absorbent liquid 30a, which has passed through each of the first openings 56a, toward the first heat transfer tube group 32a. The second heat transfer tube group 32b includes a plurality of second heat transfer tubes 32q. The second heat transfer tubes 32q are arranged in rows and columns inside the second container 31b. As shown in FIG. 3B, the second drip feed 5b has a plurality of second openings 56b. The second openings 56b are arranged along the longitudinal direction of the second heat transfer tubes 32q (X-axis direction). The second openings 56b are arranged, for example, at equal intervals in a direction parallel to the longitudinal direction of the second heat transfer tubes 32q, for example. The second drip feed 5b drips a second absorbent liquid 30b, which includes at least a part or all of the first absorbent liquid 30a dripped by the first drip feed 5a and has passed through each of the second openings 56b, toward the second heat transfer tube group 32b. The absorber 3 satisfies a relationship of A2/L2<A1/L1. A1 represents an opening area of each first opening 56a. L1 represents the peripheral length of each first opening 56a. A2 represents an opening area of each second opening 56b. L2 represents the peripheral length of each second opening 56b.

The total amount of the second absorbent liquid 30b dripped from the second drip feed 5b is, for example, the amount of all or a part of the first absorbent liquid 30a dripped by the first drip feed 5a. The second absorbent liquid 30b dripped from the second drip feed 5b may include all or a part of the first absorbent liquid 30a dripped by the first drip feed 5a, and the absorbent liquid directly supplied to the second drip feed 5b without passing through the first drip feed 5a. That is, at least a part of the second absorbent liquid 30b includes at least a part of the first absorbent liquid 30a. A case where the first absorbent liquid 30a is stored in the second drip feed 5b as at least a part of the second absorbent liquid 30b will be described below as a typical example.

The absorber 3 is, for example, a shell-and-tube heat exchanger. The absorber 3 is typically a sprinkling shell-and-tube absorber.

In the absorber 3, each of the first container 31a and the second container 31b is, for example, a container having thermal insulation properties and pressure resistance. In each of the first container 31a and the second container 31b, the absorbent liquid is stored. For example, the first absorbent liquid 30a dripped from the first drip feed 5a is stored in a bottom portion of the first container 31a. The second absorbent liquid 30b dripped from the second drip feed 5b is stored in a bottom portion of the second container 31b. The first container 31a and the second container 31b each isolate the vapor-phase refrigerant stored therein from the outside air, such as air at atmospheric pressure. The second container 31b is disposed, for example, under the first container 31a.

In the first heat transfer tube group 32a, the first heat transfer tubes 32p are arranged, for example, in parallel to each other to define a plurality of rows in the gravity direction. The first heat transfer tubes 32p are arranged, for example, to form a square grid or a rectangular grid in a plane perpendicular to the longitudinal direction of the first heat transfer tubes 32p (ZY plane). In the second heat transfer tube group 32b, the second heat transfer tubes 32q are arranged, for example, in parallel to each other to define a plurality of rows in the gravity direction. The second heat transfer tubes 32q are arranged, for example, to form a square grid or a rectangular grid in a plane perpendicular to the longitudinal direction of the second heat transfer tubes 32q (ZY plane). Each of the first heat transfer tubes 32p and the second heat transfer tubes 32q is a tube made of, for example, copper or stainless steel. The first heat transfer tubes 32p and the second heat transfer tubes 32q each may have grooves in its inner surface and outer surface.

The first drip feed 5a is disposed, for example, above the first heat transfer tube group 32a in the gravity direction. The second drip feed 5b is disposed, for example, above the second heat transfer tube group 32b in the gravity direction.

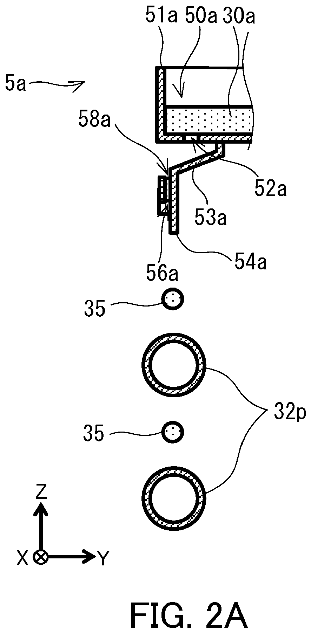

As shown in FIG. 2A and FIG. 2B, the first drip feed 5a has, for example, a tray 51a and a holder 53a. The tray 51a has therein a storage space 50a, and the first absorbent liquid 30a is stored in the storage space 50a. For example, the tray 51a extends in an elongated shape in a direction parallel to the longitudinal direction of the first heat transfer tubes 32p. The tray 51a has a plurality of distribution holes 52a in its bottom portion. The distribution holes 52a are arranged, for example, along the direction parallel to the longitudinal direction of the first heat transfer tubes 32p. The distribution holes 52a may be arranged at equal intervals or irregular intervals in the direction parallel to the longitudinal direction of the first heat transfer tubes 32p. The number of the distribution holes 52a in the first drip feed 5a is, for example, less than the number of the first openings 56a in the first drip feed 5a. The holder 53a is joined to the bottom surface of the tray 51a. The holder 53a has an inclined surface just under the distribution hole 52a. In addition, the holder 53a has a lateral surface that is continuous from the inclined surface to extend toward the first heat transfer tube group 32a. The first drip feed 5a has, for example, a drain 58a in contact with the lateral surface. The first openings 56a are formed, for example, in a bottom portion of the drain 58a. The first drip feed 5a has, for example, first drip portions 54a. Each first drip portion 54a is defined by an end portion of the lateral surface, contacting the drain 58a, of the holder 53a, and is formed beneath the first opening 56a. The first drip feed 5a has, for example, a plurality of first drip portions 54a corresponding to the plurality of first openings 56a. The first drip portion 54a is, for example, plate-like. The first drip portion 54a has a ridge or a vertex at its pointed portion.

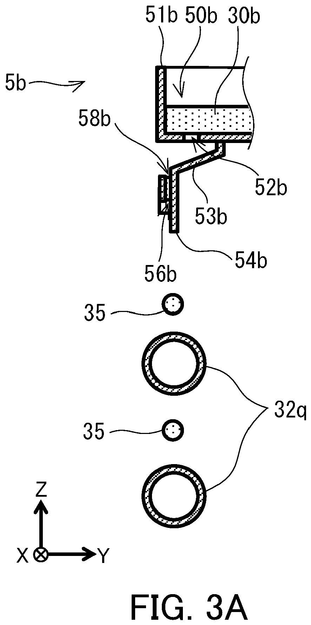

As shown in FIG. 3A and FIG. 3B, the second drip feed 5b has, for example, a tray 51b and a holder 53b. The tray 51b has therein a storage space 50b, and the second absorbent liquid 30b is stored in the storage space 50b. For example, the tray 51b extends in an elongated shape in a direction parallel to the longitudinal direction of the second heat transfer tubes 32q. The tray 51b has a plurality of distribution holes 52b in its bottom portion. The distribution holes 52b are arranged, for example, along the direction parallel to the longitudinal direction of the second heat transfer tubes 32q. The distribution holes 52b may be arranged at equal intervals or irregular intervals in the direction parallel to the longitudinal direction of the second heat transfer tubes 32q. The number of distribution holes 52b in the second drip feed 5b is, for example, less than the number of the second openings 56b in the second drip feed 5b. The holder 53b is joined to the bottom surface of the tray 51b. The holder 53b has an inclined surface just under the distribution holes 52b. In addition, the holder 53b has a lateral surface that is continuous from the inclined surface to extend toward the second heat transfer tube group 32b. The second drip feed 5b has, for example, a drain 58b in contact with the lateral surface. The second openings 56b are formed, for example, in a bottom portion of the drain 58b. The second drip feed 5b has, for example, second drip portions 54b. Each second drip portion 54b is defined by an end portion of the lateral surface, contacting the drain 58b, of the holder 53b, and is formed beneath the second opening 56b. The second drip feed 5b has, for example, a plurality of second drip portions 54b corresponding to the plurality of second openings 56b. The second drip portions 54b is, for example, plate-like. The second drip portion 54b has a ridge or a vertex at its pointed portion.

The tray 51a, the holder 53a, the tray 51b, and the holder 53b each can be fabricated by, for example, pressing a stainless steel plate. The first drip feed 5a can be fabricated by, for example, welding the tray 51a and the holder 53a, and the second drip feed 5b can be fabricated by, for example, welding the tray 51b and the holder 53b.

In the absorber 3, the value of A2/L2 is not limited to a specific value, as long as the relationship of A2/L2<A1/L1 is satisfied. For example, A2/L2 is 70% or more and 90% or less of A1/L1. A2/L2 may be about 80% of A1/L1.

As shown in FIG. 2A, FIG. 2B, FIG. 3A, and FIG. 3B, the first openings 56a and the second openings 56b each extend in the horizontal direction, for example. A boundary between each first opening 56a and the surrounding of the first opening 56a and a boundary between each second opening 56b and the surrounding of the second opening 56b are each formed of, for example, a straight line only. At least a part of the boundary may be formed of a curved line.

The first openings 56a and the second openings 56b each can be formed by, for example, joining, to the body of the holder 53a or the holder 53b having the inclined surface, a member obtained by bending an end portion of a plate such as a stainless steel plate having a rectangular slit formed therein. In this case, the opening area A1 of the first opening 56a is, for example, S₁×t₁, and the peripheral length L1 of the first opening 56a is, for example, 2S₁+2t₁. S₁ is the width of the slit formed in the end portion of the plate for forming the first opening 56a, and t₁ is the thickness of the plate. In addition, the opening area A2 of the second opening 56b is, for example, S₂×t₂, and the peripheral length L2 of the second opening 56b is, for example, 2S₂+2t₂. S₂ is the width of the slit formed in the end portion of the plate for forming the second opening 56b, and t₂ is the thickness of the plate. The thickness t₁ and the thickness t₂ may be the same value or different values.

As shown in FIG. 2B and FIG. 3B, a width W2 of the second opening 56b in the longitudinal direction of the second heat transfer tubes 32q is, for example, smaller than a width W1 of the first opening 56a in the longitudinal direction of the first heat transfer tubes 32p.

In the absorber 3, the ratio of the width W2 to the width W1 (W2/W1) is not limited to a specific value, as long as the relationship of A2/L2<A1/L1 is satisfied. The ratio of W2/W1 is, for example, 70% or more and 90% or less. The ratio of W2/W1 may be about 80%.

In the absorber 3, the relationship between A2, L2, and a viscosity ρ2 is not particularly limited, as long as the relationship of A2/L2<A1/L1 is satisfied. The viscosity ρ2 is the viscosity of the second absorbent liquid 30b when it passes through the second opening 56b.

As shown in FIG. 1, the heat exchange unit 1 includes the evaporator 2 and the absorber 3. The evaporator 2 generates a vapor-phase refrigerant. The absorber 3 allows the absorbent liquid to absorb the vapor-phase refrigerant generated by the evaporator 2. The heat exchange unit 1 includes, for example, a vapor flow path 15. The vapor-phase refrigerant generated by the evaporator 2 is sent to the absorber 3 through the vapor flow path 15. The vapor flow path 15 is formed of, for example, a metal material, such as iron or steel, having thermal insulation properties and pressure resistance.

The heat exchange unit 1 is charged with the refrigerant and the absorbent liquid. The refrigerant is, for example, a hydrofluorocarbon (HFC)-based chlorofluorocarbon refrigerant or a natural refrigerant, such as water or ammonia. The absorbent liquid is, for example, an aqueous solution of lithium bromide, or an ionic fluid.

As shown in FIG. 1, the evaporator 2 includes, for example, an upper container 21a, an upper heat transfer tube group 22a, an upper drip feed 4a, a lower container 21b, a lower heat transfer tube group 22b, and a lower drip feed 4b.

The evaporator 2 is, for example, a shell-and-tube heat exchanger. The absorber 3 is, for example, a sprinkling shell-and-tube absorber. For example, in the case where a refrigerant, such as water, whose saturated vapor pressure at ordinary temperature (20°C±15°C) is a negative pressure is used, the water-level head of the refrigerant liquid tends to greatly influence the evaporation pressure in a flooded shell-and-tube heat exchanger. Therefore, in the case where a refrigerant, such as water, is used, it is advantageous that the evaporator 2 is a sprinkling shell-and-tube heat exchanger.

Each of the upper container 21a and the lower container 21b is, for example, a container having thermal insulation properties and pressure resistance. In each of the upper container 21a and the lower container 21b, the refrigerant liquid is stored. In addition, the upper container 21a and the lower container 21b each isolate the vapor-phase refrigerant stored therein from the outside air, such as air at atmospheric pressure. The lower container 21b is disposed, for example, under the upper container 21a.

The upper heat transfer tube group 22a includes a plurality of upper heat transfer tubes 22p. The upper heat transfer tubes 22p are arranged in rows and columns inside the upper container 21a. The upper heat transfer tubes 22p are arranged, for example, in parallel to each other to define a plurality of rows in the gravity direction. The upper heat transfer tubes 22p are arranged, for example, to form a square grid or a rectangular grid in a plane perpendicular to the longitudinal direction of the upper heat transfer tubes 22p (ZY plane). The upper heat transfer tube 22p is, for example, a tube made of copper or stainless steel. The upper heat transfer tube 22p may have grooves in its inner surface and outer surface.

The upper drip feed 4a drips the refrigerant liquid toward the upper heat transfer tube group 22a. Thus, a vapor-phase refrigerant is generated inside the upper container 21a. The vapor-phase refrigerant generated inside the upper container 21a is sent to the inside of the first container 31a through the vapor flow path 15 and is absorbed.

The lower heat transfer tube group 22b includes a plurality of lower heat transfer tubes 22q. The lower heat transfer tubes 22q are arranged in rows and columns inside the lower container 21b. The lower heat transfer tubes 22q are arranged, for example, in parallel to each other to define a plurality of rows in the gravity direction. The lower heat transfer tubes 22q are arranged, for example, to form a square grid or a rectangular grid in a plane perpendicular to the longitudinal direction of the lower heat transfer tubes 22q (ZY plane). The lower heat transfer tube 22q is, for example, a tube made of copper or stainless steel. The lower heat transfer tube 22q may have grooves in its inner surface and outer surface.

The lower drip feed 4b drips the refrigerant liquid toward the lower heat transfer tube group 22b. Thus, a vapor-phase refrigerant is generated inside the lower container 21b. The vapor-phase refrigerant generated inside the lower container 21b is sent to the inside of the second container 31b through the vapor flow path 15 and is absorbed.

The upper drip feed 4a and the lower drip feed 4b each can be fabricated by, for example, forming a tray and a holder by pressing a stainless steel plate, and welding the tray and the holder, like the first drip feed 5a or the second drip feed 5b.

As shown in FIG. 1, the heat exchange unit 1 includes a partition 14. The internal space of the first container 31a and the internal space of the second container 31b are partitioned by the partition 14. In addition, the internal space of the upper container 21a and the internal space of the lower container 21b are partitioned by the partition 14. The lower drip feed 4b and the second drip feed 5b are each fixed to the partition 14 by a method such as welding, for example.

As shown in FIG. 1, the heat exchange unit 1 includes, for example, a first pump 11, a circulation path 12, and a first supply path 13. One end of the circulation path 12 is connected to the lower container 21b. The first pump 11 is, for example, a dynamic canned pump, and is disposed in the circulation path 12. Owing to the operation of the first pump 11, the refrigerant liquid stored in the evaporator 2 is pumped through the circulation path 12. The first supply path 13 is connected to the upper container 21a. The refrigerant liquid is supplied to the upper container 21a through the first supply path 13. The refrigerant liquid supplied to the upper container 21a is guided to the upper drip feed 4a. The other end of the circulation path 12 is connected to the first supply path 13, and the refrigerant liquid, which has passed through the circulation path 12, is supplied again to the upper container 21a.

As shown in FIG. 1, the heat exchange unit 1 includes, for example, a second supply path 16, a discharge path 17, and a second pump 18. The second supply path 16 is connected to the first container 31a. The first absorbent liquid 30a is supplied to the first container 31a through the second supply path 16. The first absorbent liquid 30a supplied to the first container 31a is guided to the second drip feed 5b. The discharge path 17 is connected to the second container 31b. The second pump 18 is disposed in the discharge path 17. The second pump 18 is, for example, a dynamic canned pump. Owing to the operation of the second pump 18, the second absorbent liquid 30b stored in the absorber 3 is pumped to the outside of the absorber 3. The circulation path 12, the first supply path 13, the second supply path 16, and the discharge path 17 are each formed of, for example, a flow path member having thermal insulation properties and pressure resistance.

As shown in FIG. 1, the heat exchange unit 1 includes, for example, an eliminator 19. The eliminator 19 is disposed in the vapor flow path 15. The vapor flow path 15 includes a portion bent by the eliminator 19. This prevents the refrigerant liquid inside the evaporator 2 from being dragged into the flow of the vapor-phase refrigerant and thus guided into the absorber 3. The eliminator 19 can be fabricated by, for example, welding components shaped by pressing stainless steel plates.

### [1-2. Operations]

As for the heat exchange unit 1 configured as above, its operations and functions will be described below. When the heat exchange unit 1 is not operated for a specific time period, such as at night, the internal temperature of the heat exchange unit 1 is almost equal to room temperature and uniform, and the internal pressure of the heat exchange unit 1 is uniform as well. For example, at a room temperature of 25°C, the internal temperature of the heat exchange unit 1 is also 25°C and uniform. In use of the heat exchange unit 1, a heat medium, such as water, that has absorbed heat from the outside of the heat exchange unit 1 flows through the upper heat transfer tubes 22p of the upper heat transfer tube group 22a and the lower heat transfer tubes 22q of the lower heat transfer tube group 22b. This heat medium flows into the lower heat transfer tubes 22b at, for example, 12°C. Meanwhile, a heat medium, such as water, that has dissipated heat to the outside of the heat exchange unit 1 flows through the first heat transfer tubes 32p of the first heat transfer tube group 32a and the second heat transfer tubes 32q of the second heat transfer tube group 32b. This heat medium flows into the second heat transfer tubes 32q at, for example, 32°C.

When the use of the heat exchange unit 1 is started, the refrigerant liquid is first supplied into the upper container 21a of the evaporator 2 through the first supply path 13. The refrigerant liquid to be supplied has a temperature of, for example, about 35°C. The refrigerant liquid supplied into the upper container 21a is stored in the storage space of the tray of the upper drip feed 4a. The refrigerant liquid stored in the storage space is distributed and dripped toward the upper heat transfer tube group 22a. The dripped refrigerant liquid flows down the outer surfaces of the upper heat transfer tubes 22p to be stored inside the upper container 21a. The refrigerant liquid stored inside the upper container 21a is guided to the lower drip feed 4b to be stored in the storage space of the tray of the lower drip feed 4b. The refrigerant liquid stored in the storage space is distributed and dripped toward the lower heat transfer tube group 22b. The dripped refrigerant liquid flows down the outer surfaces of the lower heat transfer tubes 22q to be stored inside the lower container 21b. The refrigerant liquid stored inside the lower container 21b is pumped by the first pump 11 to be guided again into the upper container 21a through the circulation path 12. Thus, the refrigerant liquid circulates inside and outside the evaporator 2. In the case where an absorption refrigerator including the heat exchange unit 1 operates at the rated load, the refrigerant liquid has a flow rate of, for example, about 30 L/min, and the refrigerant liquid 18 to be dripped by the upper drip feed 4a and the lower drip feed 4b also has an amount that is almost equal to the flow rate.

Next, the first absorbent liquid 30a is supplied to the first container 31a of the absorber 3 through the second supply path 16. The first absorbent liquid 30a to be supplied has, for example, a temperature of about 50°C, a solute concentration of about 63 mass%, and a viscosity of about 0.00678 Pa•s. The first absorbent liquid 30a supplied to the first container 31a is stored in the storage space 50a of the tray 51a of the first drip feed 5a. As shown in FIG. 2A and FIG. 2B, the first absorbent liquid 30a stored in the storage space 50a is distributed through the distribution holes 52a, the drain 58a, and the first openings 56a and is dripped from the first drip portions 54a toward the second heat transfer tube group 32a. The first absorbent liquid 30a to be dripped from the first drip feed 5a has a flow rate of, for example, about 16 L/min. The dripped first absorbent liquid 30a flows down the outer surfaces of the first heat transfer tubes 32p to be stored in a lower portion of the first container 31a.

The first absorbent liquid 30a stored in the lower portion of the first container 31a is guided to the second drip feed 5b, and is stored in the storage space 50b of the tray 51b, as at least a part of the second absorbent liquid 30b. The second absorbent liquid 30b to be supplied to the second drip feed 5b has, for example, a temperature of about 45°C, a solute concentration of about 60 mass%, and a viscosity of about 0.0053 Pa•s. As shown in FIG. 3A and FIG. 3B, the second absorbent liquid 30b stored in the storage space 50b is distributed through the distribution holes 52b, the drain 58b, and the second openings 56b, and is dripped from the second drip portions 54b toward the second heat transfer tube group 32b. The second absorbent liquid 30b to be dripped from the second drip feed 5b has a flow rate of, for example, about 16 L/min. The dripped second absorbent liquid 30b flows down the outer surfaces of the second heat transfer tubes 32q to be stored in a lower portion of the second container 31b. The second absorbent liquid 30b stored in the lower portion of the second container 31b is pumped by the second pump 18 to be discharged to the outside of the heat exchange unit 1 through the discharge path 17.

When the first absorbent liquid 30a and the second absorbent liquid 30b flow down the outer surfaces of the first heat transfer tubes 32p and the outer surfaces of the second heat transfer tubes 32q, respectively, the vapor-phase refrigerant charged inside the heat exchange unit 1 is absorbed by the first absorbent liquid 30a and the second absorbent liquid 30b. This increases the temperatures of the first absorbent liquid 30a and the second absorbent liquid 30b. On the other hand, the first absorbent liquid 30a and the second absorbent liquid 30b are simultaneously cooled by the heat medium flowing through the first heat transfer tubes 32p and the second heat transfer tubes 32q, so that absorption by the first absorbent liquid 30a and the second absorbent liquid 30b in supercooled states occurs continuously. This reduces the internal pressures of the evaporator 2 and the absorber 3 in the heat exchange unit 1. Along with this, the refrigerant liquid flowing down the outer surfaces of the upper heat transfer tubes 22p and the lower heat transfer tubes 22q evaporates. The evaporation of the refrigerant liquid reduces the temperature of the refrigerant liquid. However, the refrigerant liquid is simultaneously heated by the heat medium flowing through the upper heat transfer tubes 22p and the lower heat transfer tubes 22q, so that the evaporation of the refrigerant liquid occurs continuously. This keeps the internal pressure of the heat exchange unit 1 within a predetermined range, and thus the internal state of the heat exchange unit 1 becomes a steady state. The refrigerant liquid in the steady state has a temperature of, for example, about 7°C. On the other hand, the first absorbent liquid 30a to be supplied into the first container 31a has, for example, a temperature of about 50°C, a solute concentration of about 63 mass%, and a viscosity of about 0.00678 Pa•s. The first absorbent liquid 30a to be supplied into the first container 31a has a flow rate of, for example, about 16 L/min. The second absorbent liquid 30b to be supplied into the second container 31b has, for example, a temperature of about 45°C, a solute concentration of about 60 mass%, and a viscosity of about 0.0053 Pa•s. The second absorbent liquid 30b to be supplied into the second container 31b has a flow rate of, for example, about 16 L/min. The second absorbent liquid 30b to be discharged from the absorber 3 has, for example, a temperature of about 36°C, a solute concentration of about 57 mass%, and a viscosity of about 0.004768 Pa•s. The second absorbent liquid 30b to be discharged from the absorber 3 has a flow rate of, for example, about 16 L/min.

The operations of the first drip feed 5a and the second drip feed 5b will be further described with reference to FIG. 2A, FIG. 2B, FIG. 3A, FIG. 3B, and FIG. 4.

As shown in FIG. 2A and FIG. 2B, the first absorbent liquid 30a supplied to the first drip feed 5a through the second supply path 16 is stored in the storage space 50a. The first absorbent liquid 30a stored in the storage space 50a flows down while being distributed through the plurality of distribution holes 52a arranged in the longitudinal direction of the tray 51a. The first absorbent liquid 30a is guided onto the inclined surface of the holder 53a to flow down the surface of the holder 53a. Next, the first absorbent liquid 30a is guided to the drain 58a to be stored again. Subsequently, the first absorbent liquid 30a is distributed again through the plurality of first openings 56a arranged in the longitudinal direction of the first heat transfer tubes 32p to flow down. The first absorbent liquid 30a, which has passed through the first opening 56a, is guided to the first drip portions 54a to be dripped from the pointed portions of the first drip portions 54a. The first absorbent liquid 30a dripped from the first drip portions 54a forms droplets 35, and then spreads over the surfaces of the first heat transfer tubes 32p and flows down while forming liquid films 36.

As shown in FIG. 3A and FIG. 3B, the second absorbent liquid 30b guided to the second drip feed 5b from the lower portion of the first container 31a is stored in the storage space 50b. The second absorbent liquid 30b stored in the storage space 50b flows down while being distributed through the plurality of distribution holes 52b arranged in the longitudinal direction of the second heat transfer tubes 32q. The second absorbent liquid 30b is guided onto the inclined surface of the holder 53b to flow down the surface of the holder 53b. Next, the second absorbent liquid 30b is guided to the drain 58b to be stored again. Subsequently, the second absorbent liquid 30b is distributed again through the plurality of second openings 56b arranged in the longitudinal direction of the tray 51b to flow down. The second absorbent liquid 30b, which has passed through the second openings 56b, is guided to the second drip portions 54b to be dripped from the pointed portions of the second drip portions 54b. The second absorbent liquid 30b dripped from the second drip portions 54b forms droplets 35, and then spreads over the surfaces of the second heat transfer tubes 32q and flows down while forming liquid films 36.

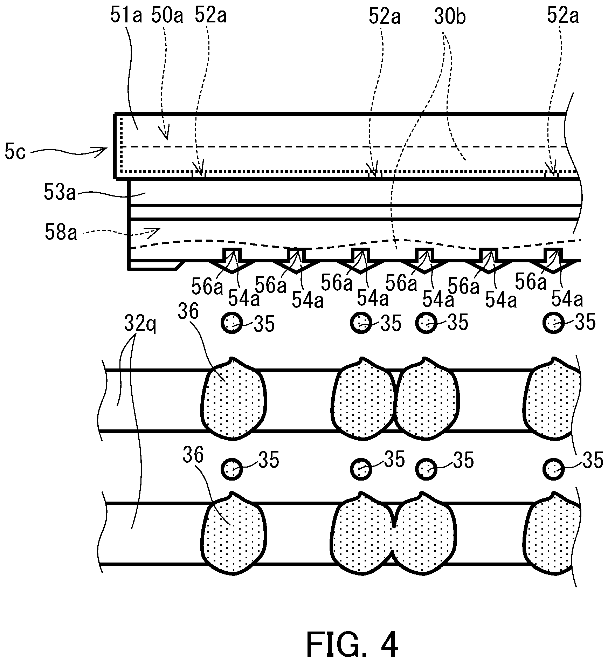

FIG. 4 shows a drip feed and heat transfer tubes in an absorber according to a reference example. The absorber according to the reference example has a similar configuration as that of the absorber 3 except portions as otherwise particularly described. The absorber according to the reference example includes a drip feed 5c configured in the same manner as the first drip feed 5a, instead of the second drip feed 5b. The constituent elements of the drip feed 5c that are identical to those of the first drip feed 5a are denoted by the same reference numerals.

### [1-3. Effects, etc.]

As described above, in the present embodiment, the absorber 3 includes the first container 31a, the first heat transfer tube group 32a, the first drip feed 5a, the second container 31b, the second heat transfer tube group 32b, and the second drip feed 5b. The absorber 3 allows the first absorbent liquid 30a and the second absorbent liquid 30b to absorb the vapor-phase refrigerant generated by the evaporator 2. The first heat transfer tube group 32a includes the plurality of first heat transfer tubes 32p. The first heat transfer tubes 32p are arranged in rows and columns inside the first container 31a. The first drip feed 5a has the plurality of first openings 56a. The first openings 56a are arranged along the longitudinal direction of the first heat transfer tubes 32p. The first drip feed 5a drips the first absorbent liquid 30a, which has passed through each of the first openings 56a, toward the first heat transfer tube group 32a. The second heat transfer tube group 32b includes the plurality of second heat transfer tubes 32q. The second heat transfer tubes 32q are arranged in rows and columns inside the second container 31b. The second drip feed 5b includes the plurality of second openings 56b. The second openings 56b are arranged along the longitudinal direction of the second heat transfer tubes 32q. The second drip feed 5b drips the second absorbent liquid 30b, which includes at least a part or all of the first absorbent liquid 30a dripped by the first drip feed 5a and has passed through each of the second openings 56b, toward the second heat transfer tube group 32b. The absorber 3 satisfies the relationship of A2/L2<A1/L1. A1 is the opening area of each first opening 56a. L1 is the peripheral length of each first opening 56a. A2 is the opening area of each second opening 56b. L2 is the peripheral length of each second opening 56b.

As shown in FIG. 2A and FIG. 2B, the first absorbent liquid 30a to be dripped from the first drip feed 5a has a high viscosity. Therefore, even in the case where A1/L1 is larger than A2/L2, the first absorbent liquid 30a is stored in a desirable state in the drain 58a. This allows the first absorbent liquid 30a to easily pass through the plurality of first openings 56a uniformly. Consequently, dripping of the first absorbent liquid 30a from the first drip feed 5a is unlikely to vary, whereby the liquid films 36 can be formed in the desired states in the first heat transfer tube group 32a. On the other hand, as shown in FIG. 4, in the case where the drip feed 5c configured in the same manner as the first drip feed 5a is used instead of the second drip feed 5b, the viscosity of the second absorbent liquid 30b to be supplied to the drip feed 5c is lower than the viscosity of the first absorbent liquid 30a supplied to the first drip feed 5a. The viscosity of the second absorbent liquid 30b to be supplied to the drip feed 5c is, for example, about 0.78 times the viscosity of the first absorbent liquid 30a supplied to the first drip feed 5a. In this case, the second absorbent liquid 30b stored in the drain 58a of the drip feed 5c passes through only the first openings 56a close to the distribution holes 52a, and therefore is unlikely to be stored in the desired state in the drain 58a. Consequently, dripping of the second absorbent liquid 30b from the drip feed 5c is likely to vary, and a large number of dry portions where liquid films 36 are not formed appear in the second heat transfer tube group 32b, which makes it difficult to form the liquid films 36 in the desired states in the second heat transfer tube group 32b. In particular, as for the plurality of first openings 56a, if the distance between each first opening 56a and a distribution hole 52a closest to the first opening 56a varies, the second absorbent liquid 30b tends to pass through only the first openings 56a close to the distribution holes 52a.

As shown in FIG. 3A and FIG. 3B, the absorber 3 satisfies the relationship of A2/L2<A1/L1. Therefore, even if the second absorbent liquid 30b dripped from the second drip feed 5b has a low viscosity, the second absorbent liquid 30b passes through not only the second openings 56b close to the distribution holes 52b. Therefore, in the drain 58b of the second drip feed 5b, the second absorbent liquid 30b is stably stored in the desired state, and the hydraulic head regarding the second absorbent liquid 30b passing through the plurality of second openings 56b is unlikely to vary. Thus, the flow velocity of the second absorbent liquid 30b passing through the plurality of second openings 56b is unlikely to vary, and the dripping of the second absorbent liquid 30b from the second drip feed 5b is unlikely to vary. As a result, the liquid films 36 can be formed in the desired states in the second heat transfer tube group 32b, and the wettability of the heat transfer tubes relative to the absorbent liquid is easily increased while dripping the absorbent liquid over a plurality of stages. As for the plurality of second openings 56b, even if the distance between each second opening 56b and a distribution hole 52b closest to the second opening 56b varies, the second absorbent liquid 30b is likely to be stably stored in the desired state in the drain 58b.

As in the present embodiment, the width of the second opening 56b in the longitudinal direction of the second heat transfer tubes 32q may be smaller than the width of the first opening 56a in the longitudinal direction of the first heat transfer tubes 32p. Thus, the sizes of A2/L2 and A1/L1 can be adjusted within a desired range through a simple process.

As in the present embodiment, the heat exchange unit 1 may include the evaporator 2 and the absorber 3. Thus, in the absorber 3 of the heat exchange unit 1, the liquid films 36 can be formed in the desired states in the second heat transfer tube group 32b, whereby the wettability of the heat transfer tubes relative to the absorbent liquid is easily increased while dripping the absorbent liquid over the plurality of stages.

### (Embodiment 2)

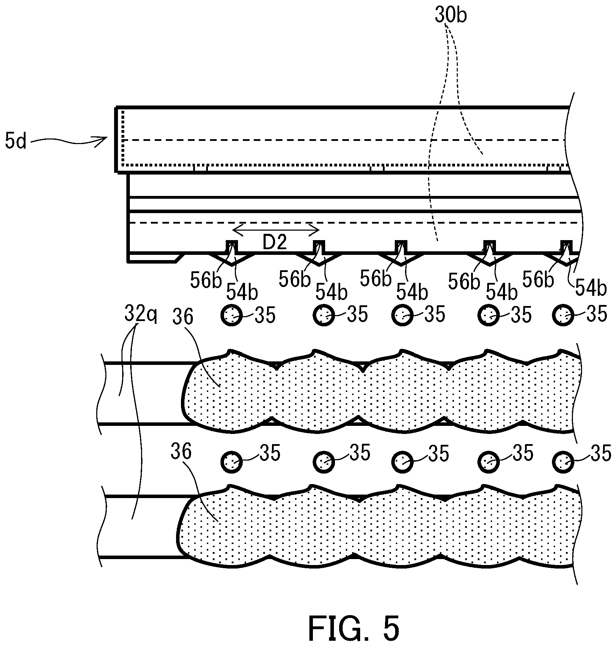

Embodiment 2 will be described below with reference to FIG. 5. A heat exchange unit according to Embodiment 2 has a similar configuration to that of the heat exchange unit 1 according to Embodiment 1 except portions as otherwise particularly described. A second drip feed 5d according to Embodiment 2 shown in FIG. 5 has a similar configuration to that of the second drip feed 5b except portions as otherwise particularly described. The constituent elements of the second drip feed 5d that are identical or corresponding to those of the second drip feed 5b are denoted by the same reference numerals, and detailed descriptions thereof will be omitted. The description of Embodiment 1 also applies to Embodiment 2 unless the descriptions are technically contradictory.

### [2-1. Configuration]

As shown in FIG. 5, in the second drip feed 5d, a distance D2 between the second openings 56b adjacent to each other in the longitudinal direction of the second heat transfer tubes 32q is larger than a distance D1 between the first openings 56a adjacent to each other in the longitudinal direction of the first heat transfer tubes 32p. The distance D1 is a distance between the centers of the first openings 56a in the longitudinal direction of the first heat transfer tubes 32p. The distance D2 is a distance between the centers of the second openings 56b in the longitudinal direction of the second heat transfer tube 32q.

The ratio of the distance D2 to the distance D1 (D2/D1) is not limited to a specific value. The ratio of D2/D1 is, for example, 1.67. The ratio of D2/D1 may be 1.2 or more and 5 or less.

### [2-2. Operations]

As for the second drip feed 5d configured as described above, its operations and functions will be described below. It is assumed that an absorption refrigerator provided with the heat exchange unit of the present embodiment is driven under the condition of a low outdoor temperature that is 30°C or lower. In this case, the temperature of the heat medium, such as water, that flows through the first heat transfer tube group 32a and the second heat transfer tube group 32b and that has dissipated heat to the outside of the absorption refrigerator, is reduced, and the temperature of the heat medium that flows into the second heat transfer tube group 32b can be, for example, 28°C.

In the absorber 3, the first absorbent liquid 30a is supplied into the first container 31a through the second supply path 16. The first absorbent liquid 30a to be supplied has, for example, a temperature of about 50°C, a solute concentration of about 63 mass%, and a viscosity of about 0.00678 Pa•s. The first absorbent liquid 30a to be supplied into the first container 31a has a flow rate of, for example, 16 L/min. The first absorbent liquid 30a supplied into the first container 31a is stored in the first drip feed 5a and is dripped from the first drip feed 5a. The dripped first absorbent liquid 30a flows down the outer surfaces of the first heat transfer tube 32p to be stored in the lower portion of the first container 31a.

The first absorbent liquid 30a stored in the lower portion of the first container 31a is guided to the second drip feed 5d, and the second absorbent liquid 30b including at least a part or all of the first absorbent liquid 30a is dripped from the second drip feed 5d toward the second heat transfer tube group 32b. The second absorbent liquid 30b to be dripped from the second drip feed 5d has, for example, a temperature of about 41°C, a solute concentration of about 58 mass%, and a viscosity of about 0.0047 Pa•s. The second absorbent liquid 30b to be dripped from the second drip feed 5d has a flow rate of, for example, about 16 L/min. The second absorbent liquid 30b dripped from the second drip feed 5d flows down the outer surfaces of the second heat transfer tube 32q to be stored in the lower portion of the second container 31b. The second absorbent liquid 30b stored in the lower portion of the second container 31b is pumped by the second pump 18 to be discharged to the outside of the heat exchange unit through the discharge path 17.

### [2-3. Effects, etc.]

As described above, in the present embodiment, the distance D2 between the second openings 56b adjacent to each other in the longitudinal direction of the second heat transfer tubes 32q is larger than the distance D1 between the first openings 56a adjacent to each other in the longitudinal direction of the first heat transfer tubes 32p. Therefore, under the condition such as the low outdoor temperature, the thickness of the liquid films 36 of the second absorbent liquid 30b is unlikely to vary in the second heat transfer tube group 32b, whereby the wettability of the heat transfer tubes relative to the absorbent liquid is easily increased.

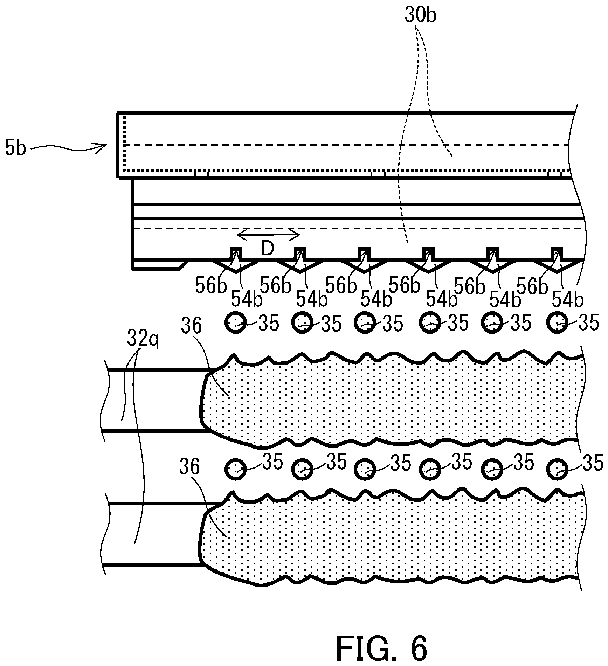

FIG. 6 shows dripping of the second absorbent liquid 30b in the case where the second drip feed 5b is used instead of the second drip feed 5d in the present embodiment, under the condition of the low outdoor temperature. In the second drip feed 5b, a distance D between the second openings 56b adjacent to each other in the longitudinal direction of the second heat transfer tubes 32q is equal to the distance D1 between the first openings 56a adjacent to each other in the longitudinal direction of the first heat transfer tubes 32p.

The viscosity of the second absorbent liquid 30b dripped from the second drip feed 5b under the condition of the low outdoor temperature is lower than the viscosity of the second absorbent liquid 30b dripped from the second drip feed 5b in the normal operation. The viscosity of the second absorbent liquid 30b dripped from the second drip feed 5b under the condition of the low outdoor temperature is, for example, 0.88 times the viscosity of the second absorbent liquid 30b dripped from the second drip feed 5b in the normal operation. In the second drip feed 5b, since the relationship of A2/L2<A1/L1 is satisfied, the flow velocity of the absorbent liquid 30 passing through the plurality of second openings 56b is unlikely to vary, and the dripping of the second absorbent liquid 30b from the second drip feed 5b is unlikely to vary. On the other hand, the dripped second absorbent liquid 30b widely spreads on the outer surfaces of the second heat transfer tubes 32q, and the flows of the second absorbent liquid 30b in the liquid films 36 formed by the adjacently dripped droplets 35 are likely to interfere with each other. Therefore, the thickness of the liquid films 36 is increased at specific positions on the outer surfaces of the second heat transfer tubes 32q, and the thickness of the liquid films 36 of the second absorbent liquid 30b is likely to vary in the second heat transfer tube group 32b.

Meanwhile, in the present embodiment, the distance D2 in the second drip feed 5d is larger than the distance D1. Therefore, even under the condition of the low outdoor temperature in which the viscosity of the second absorbent liquid 30b dripped from the second drip feed 5d is lower than that in the normal operation, the flows of the second absorbent liquid 30b in the liquid films 36 formed by the adjacently dripped droplets 35 are unlikely to interfere with each other. As a result, even under the condition such as the low outdoor temperature, the thickness of the liquid films 36 of the second absorbent liquid 30b is unlikely to vary in the second heat transfer tube group 32b, whereby the wettability of the heat transfer tubes relative to the second absorbent liquid 30b is easily increased.

### (Embodiment 3)

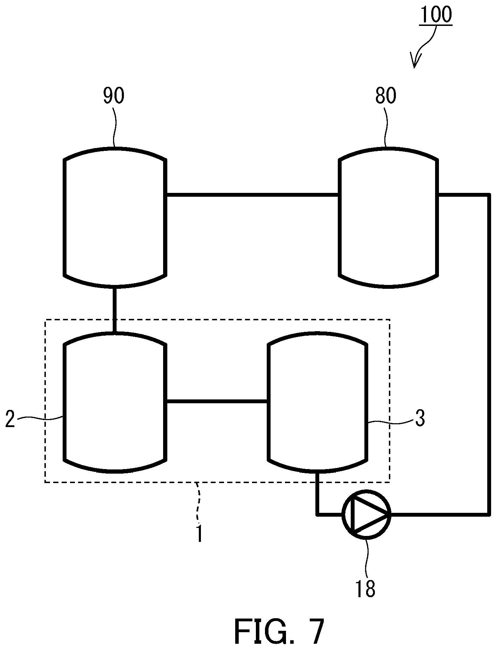

Embodiment 3 will be described below with reference to FIG. 7.

### [3-1. Configuration]

As shown in FIG. 7, an absorption refrigerator 100 includes the heat exchange unit 1. The absorption refrigerator 100 further includes, for example, a regenerator 80 and a condenser 90. The absorption refrigerator 100 is, for example, an absorption refrigerator of the single-effect cycle.

### [3-2. Operations]

As for the absorption refrigerator 100 configured as above, its operations and functions will be described below. The second absorbent liquid 30b stored in the second container 31b is guided to the regenerator 80 through the discharge path 17. In the regenerator 80, the absorbent liquid is heated to increase the solute concentration. The absorbent liquid with the increased solute concentration is guided to the absorber 3 through the second supply path 16. Meanwhile, the heating of the absorbent liquid in the regenerator 80 generates a vapor-phase refrigerant. This vapor-phase refrigerant is guided to the condenser 90, and is cooled to be condensed in the condenser 90. Thus, a refrigerant liquid is generated. For example, the refrigerant liquid is reduced in pressure and then is guided to the evaporator 2 through the first supply path 13.

### [3-3. Effects]

As described above, in the present embodiment, the absorption refrigerator 100 includes the heat exchange unit 1. In the absorber 3 of the heat exchange unit 1, the liquid films 36 are formed in the desired states in the second heat transfer tube group 32b, and the wettability of the heat transfer tubes relative to the absorbent liquid is easily increased while dripping the absorbent liquid over a plurality of stages. Accordingly, the coefficient of performance (COP) of the absorption refrigerator 100 is easily increased.

### (Other embodiments)

As described above, Embodiments 1, 2, and 3 have been described as exemplary techniques disclosed in the present application. However, the technique according to the present disclosure is not limited to these, and is also applicable to embodiments with modifications, replacements, additions, omissions, and the like. Furthermore, it is also possible to combine the constituent elements described in Embodiments 1 and 2 above to achieve a new embodiment. Thus, other embodiments will be exemplified below.

In Embodiment 1, as one configuration example of the first drip feed 5a, the description has been given on the configuration including the tray 51a and the holder 53a. The first drip feed 5a only needs to be capable of dripping the first absorbent liquid 30a toward the first heat transfer tube group 32a through the plurality of first openings 56a. Accordingly, the first drip feed 5a is not limited to the configuration including the tray 51a and the holder 53a. However, if the first drip feed 5a has such a configuration, the first absorbent liquid 30a is easily distributed in the longitudinal direction of the first heat transfer tubes 32p.

In Embodiment 1, as one configuration example of the second drip feed 5b, the description has been given on the configuration including the tray 51b and the holder 53b. The second drip feed 5b only needs to be capable of dripping the second absorbent liquid 30b toward the second heat transfer tube group 32b through the plurality of second openings 56b. Accordingly, the second drip feed 5b is not limited to the configuration including the tray 51b and the holder 53b. However, if the second drip feed 5b has such a configuration, the second absorbent liquid 30b is easily distributed in the longitudinal direction of the second heat transfer tubes 32q.

In Embodiment 3, the description has been given on an absorption refrigerator of the single-effect cycle as one example of the absorption refrigerator 100. The absorption refrigerator 100 only needs to include a heat exchange unit that satisfies the relationship of A2/L2<A1/L1. Accordingly, the absorption refrigerator 100 is not limited to an absorption refrigerator of the single-effect cycle. The absorption refrigerator 100 may be an absorption refrigerator of the double-effect cycle or the triple-effect cycle. If a gas burner is used as the heat source for the regenerator 80, the absorption refrigerator 100 can be a gas chiller.

Note that the above embodiments are for exemplification of the technique according to the present disclosure, and accordingly can be subjected to various modifications, replacements, additions, omissions, and the like within the scope of the claims or equivalents thereof.

### INDUSTRIAL APPLICABILITY

The present disclosure is applicable to absorption refrigerators that are adapted to central air conditioners for buildings, chillers for process cooling, and the like.

## Claims

1. An absorber for an absorption refrigerator, comprising:
a first container;
a first heat transfer tube group including a plurality of first heat transfer tubes arranged in rows and columns inside the first container;
a first drip feed having a plurality of first openings arranged along a longitudinal direction of the first heat transfer tubes, the first drip feed being configured to drip, toward the first heat transfer tube group, a first absorbent liquid that has passed through each of the first openings;
a second container;
a second heat transfer tube group including a plurality of second heat transfer tubes arranged in rows and columns inside the second container; and
a second drip feed having a plurality of second openings arranged along a longitudinal direction of the second heat transfer tubes, the second drip feed being configured to drip, toward the second heat transfer tube group, a second absorbent liquid that includes at least a part or all of the first absorbent liquid dripped by the first drip feed and that has passed through each of the second openings, wherein
the first absorbent liquid and the second absorbent liquid are allowed to absorb a vapor-phase refrigerant generated by an evaporator, and
an opening area A1 of each first opening, a peripheral length L1 of each first opening, an opening area A2 of each second opening, and a peripheral length L2 of each second opening satisfy a relationship of A2/L2<A1/L1.

2. The absorber for an absorption refrigerator according to claim 1, wherein
a width, of each second opening, in the longitudinal direction of the second heat transfer tubes is smaller than a width, of each first opening, in the longitudinal direction of the first heat transfer tubes.

3. The absorber for an absorption refrigerator according to claim 1 or 2, wherein
a distance between the second openings adjacent to each other in the longitudinal direction of the second heat transfer tubes is larger than a distance between the first openings adjacent to each other in the longitudinal direction of the first heat transfer tubes.

4. A heat exchange unit for an absorption refrigerator, comprising:
an evaporator configured to generate a vapor-phase refrigerant; and
the absorber for an absorption refrigerator according to any one of claims 1 to 3, the absorber allowing the first absorbent liquid and the second absorbent liquid to absorb the vapor-phase refrigerant generated by the evaporator.

5. An absorption refrigerator comprising the heat exchange unit for an absorption refrigerator, according to claim 4.
